# EUROPEAN PATENT SPECIFICATION

(11) **EP 3 118 658 B1**
(45) Date of publication and mention of the grant of the patent: **21.08.2019**
(21) Application number: 15760721.9
(22) Date of filing: 09.03.2015
(51) Int. Cl.: G02B 1/115, G02B 5/26, G02B 5/28, G02C 7/10, G02B 27/00

(54) **MIRROR-COATED LENS**
VERSPIEGELTE LINSE
LENTILLE REVÊTUE D'UN MIROIR

(30) Priority: 14.03.2014 JP 2014052228
(43) Date of publication of application: 18.01.2017
(73) Proprietor: Hoya Lens Thailand Ltd., Pathumthani 12130 (TH)
(72) Inventor: IWASAKI, Eisaku, Tokyo 161-8525 (JP); ADACHI, Makoto, Tokyo 161-8525 (JP)
(74) Representative: Hoffmann Eitle
(86) International application number: PCT/JP2015/056855
(87) International publication number: WO 2015/137282

(56) References cited:
- WO-A1-99/21048
- JP-A- 2000 066 149
- JP-A- 2001 290 112
- JP-A- 2005 292 204
- JP-A- 2005 292 204
- JP-A- 2006 267 561
- JP-A- 2009 258 400
- JP-A- 2010 522 356
- JP-A- 2013 097 160

## Description

### Technical Field

The present invention relates to a mirror-coated lens having a functional film on each of a front surface and a back surface thereof, and particularly relates to a mirror-coated lens used for eyeglasses.

### Background Art

In general, various sunglasses are commercially available, and some of them are sunglasses using a mirror-coated eyeglass lens having a metallic luster on a surface thereof . The eyeglass lens has a reflection enhancing effect in a convex lens surface thereof and has a light absorbing characteristic due to a further disposed metal layer. Therefore, when wearing sunglasses with the eyeglass lens, a wearer can see scenery, but the eyes of the wearer are not visually recognized easily from the outside because the eyeglass lens has a mirror-like function due to processing on the convex surface side.

Patent Literature 1 has proposed a plastic mirror-coated lens having a reflection enhancing effect in a convex surface, having an antireflection effect in a concave surface, and having a functional film obtained by laminating specific first to seventh layers sequentially from a surface of a plastic substrate as a plastic mirror-coated lens not deteriorating a reflection enhancing effect of a lens convex surface, enhancing an antireflection effect of a lens concave surface, and improving a luminous transmittance in a plastic mirror-coated lens.

In Patent Literature 2, it has been found that by coloring a lens in mirror-coated sunglasses providing excellent wearing feeling without feeling of back surface reflection, reflection on a back side of the mirror-coated lens can be reduced due to a transparent dielectric and a color balance during wearing can be made to be easily visible even when the mirror coating reflects only light having a specific wavelength. Patent Literature 2 has proposed mirror-coated sunglasses obtained by coating a convex surface of a synthetic resin lens colored using a dye and/or a pigment with mirror coating formed of a dielectric multilayer film and coating a concave surface thereof with an antireflection film formed of a dielectric multilayer film.

Patent Literature 3 has proposed an optical element including a multilayer inorganic vapor deposition film as a film structure on at least one surface of a transparent base material as an optical element (for example, eyeglass lens) exhibiting an effect of cutting heat rays in a wide wavelength range of near-infrared rays, desirable from a viewpoint of protecting eyes, and providing cool feeling due to cutting heat rays in intense heat or the like. The inorganic vapor deposition film includes, sequentially from a surface side of the transparent base material, a heat ray cutting composite layer and an optical composite layer. The heat ray cutting composite layer is formed of a metal layer formed of or based on at least one metal element selected from the group 10 in the periodical table, and an adhesive layer formed of titania (including a composite oxide) adjacent to upper and lower surfaces of the metal layer.

### Citation List

### Patent Literature

Patent Literature 1: JP 2005-292204 A
Patent Literature 2: JP 2000-66149 A
Patent Literature 3: JP 2013-011711 A

### Summary of Invention

### Technical Problem

Conventional mirror-coated lenses indicated in Patent Literatures 1 to 3 have a problem in clarity of vision of a wearer due to a low transmittance. In recent years, in sports glasses and fashion applications, in order to emphasize clarity of vision of a wearer, there has been a demand for a mirror-coated lens having a high transmittance. On the other hand, in order to increase the transmittance of the mirror-coated lens, it is considered to reduce the thickness of a metal layer of mirror coating formed on a surface. However, in this case, the transmittance is increased, but it has been found that conspicuous glare and a flare phenomenon and a ghost phenomenon occur disadvantageously. On the other hand, in order to suppress reflection of a film formed on a surface by observation from a back surface side, it is only required to impart an absorption characteristic to a lens base material (coloring or the like) . However, in this case, the transmittance is largely decreased disadvantageously.

Therefore, an obj ect of the present invention is to provide a mirror-coated lens having a high transmittance and capable of suppressing the flare phenomenon and the ghost Phenomenon. The invention is defined by the accompanying claims.

### Solution to Problem

Regarding the above object, it has been found that the flare phenomenon and the ghost phenomenon can be suppressed by adjusting a luminous reflectance and a luminous transmittance on a front surface side of a lens base material with a functional film (C1) on the front surface side and reducing a luminous reflectance on a back surface side of the lens base material with a functional film (C2) on the back surface side, and the present invention has been completed.

That is, the present invention relates to the following [1] to [6].
[1] A mirror-coated lens including:
   a lens base material;
   a functional film (C1) containing a low refractive index layer, a high refractive index layer, and a metal layer on a front surface of the lens base material; and
   a functional film (C2) containing a low refractive index layer and a high refractive index layer on a back surface of the lens base material, wherein
   the luminous reflectance on the front surface side is from 3 to 30%,
   the luminous transmittance of the mirror-coated lens is from 55 to 80%, and
   the luminous reflectance on the back surface side is from 0.1 to 9%.
[2] The mirror-coated lens according to [1], wherein a metal species contained in the metal layer is at least one selected from Cr, Ta, Nb, Ti, and Zr.
[3] The mirror-coated lens according to [1] or [2], wherein the total luminous transmittance of the metal layers of the functional film (C1) is from 60 to 90%.
[4] The mirror-coated lens according to any one of [1] to [3], wherein a maximum reflectance of reflected light on the back surface side at a wavelength of 380 nm to 780 nm is 15% or less.
[5] The mirror-coated lens according to any one of [1] to [4], wherein
   a main wavelength of reflected light on the front surface side is from 380 nm to 600 nm, and
   a difference between a maximum reflectance Rₜ at the main wavelength and a minimum reflectance R_{b} of reflected light on the front surface at a wavelength of 380 nm to 780 nm (Rₜ - R_{b}) is 8% or more.
[6] The mirror-coated lens according to any one of [1] to [5], wherein a blue light cutting ratio on the front surface side is from 10 to 60%.

### Advantageous Effects of Invention

The present invention can provide a mirror-coated lens having a high transmittance and capable of suppressing a flare phenomenon and a ghost phenomenon.

### Description of Embodiments

A mirror-coated lens of the present invention includes a lens base material, a functional film (C1) containing a low refractive index layer, a high refractive index layer, and a metal layer on a front surface of the lens base material, and a functional film (C2) containing a low refractive index layer and a high refractive index layer on a back surface of the lens base material. The functional film (C1) contains a metal layer. Therefore, a mirror-coated lens having a surface exhibiting a mirror-like reflection characteristic can be obtained.

Here, the "back surface" of the lens base material means a surface disposed on an eyeball side of a wearer, and the "front surface" of the lens base material means a surface opposite to the back surface. More specifically, in a case of a lens having a convex surface and a concave surface, the front surface means the convex surface, and the back surface means the concave surface.

In the mirror-coated lens of the present invention, the luminous reflectance on the front surface side is from 3 to 30% such that the front surface exhibits a mirror-like reflection characteristic when the mirror-coated lens is visually recognized from the outside. The luminous reflectance on the front surface side is preferably from 5 to 25%, more preferably from 5.0 to 18.0%, and still more preferably from 7.0 to 9.5%.

The above luminous reflectance is obtained by appropriately changing a film thickness while a film thickness of the metal layer of the functional film (C1) and the refractive indices of the low refractive index layer and the high refractive index layer are considered. The luminous reflectance on the front surface side is measured by a measurement method described in Examples.

In the mirror-coated lens of the present invention, in order to make vision of a wearer clear, the luminous transmittance of the mirror-coated lens is from 55 to 80%, preferably from 58 to 80%, more preferably from 60 to 80%, and still more preferably from 67 to 79%.

The luminous transmittance is obtained by appropriately changing a film thickness while a film thickness of the metal layer of the functional film (C1) and refractive indices of the low refractive index layer and the high refractive index layer are considered. The luminous transmittance is measured by a measurement method described in Examples.

In the mirror-coated lens of the present invention, in order to suppress the flare phenomenon and the ghost phenomenon, the luminous reflectance on the back surface side of the lens base material is from 0.1 to 9%, preferably from 0.5 to 8.0%, more preferably from 1.0 to 7.0%, and still more preferably from 1.6 to 5.0%.

The luminous reflectance is obtained by appropriately changing a film thickness while a film thickness of the metal layer of the functional film (C1) and refractive indices of the low refractive index layer and the high refractive index layer of the functional film (C2) are considered. A light absorption characteristic may be adjusted using a light absorbing material suchas a color material. However, by adjusting a layer structure of the functional film (C2) such that the luminous reflectance on the back surface side is within the above range, use of the light absorbing material can be avoided, and therefore the luminous transmittance of the mirror lens can be increased.

The luminous reflectance is measured by a measurement method described in Examples.

A difference in the luminous reflectance between the front surface side of the mirror-coated lens and the back surface side thereof (the front surface side - the back surface side) is preferably 0% or more in order to enhance an effect of making eyes of a wearer not easily recognized from the outside and making the wearer see scenery of the outside easily. The difference (the front surface side - the back surface side) is more preferably 3% or more, and still more preferably 5% or more in order to further enhance the effect. The difference is preferably 25% or less, more preferably 20% or less, and still more preferably 15% or less.

A blue light cutting ratio on the front surface side of the mirror-coated lens is preferably from 10 to 60%, more preferably from 30 to 55%, and still more preferably from 40 to 55% in order to protect the eyes of a wearer. The blue light cutting ratio on the front surface side is measured by a measurement method described in Examples.

As described above, according to the present invention, by the luminous reflectance on the front surface side, the luminous transmittance of the mirror-coated lens, and the luminous reflectance on the back surface side within a predetermined range, a mirror lens having a high transmittance and having the flare phenomenon and the ghost phenomenon suppressed can be obtained. By enhancing the transmittance of the mirror lens, the flare phenomenon and the ghost phenomenon emphasized can be suppressed.

### (Color of reflected light)

In the mirror-coated lens of the present invention, a main wavelength of reflected light on the front surface side is preferably from 380 nm to 600 nm, and a difference between a maximum reflectance Rₜ at the main wavelength and a minimum reflectance R_{b} of reflected light on the front surface at a wavelength of 380 nm to 780 nm (Rₜ - R_{b}) (hereinafter, also simply referred to as "(Rₜ - R_{b}) value") is preferably 8% or more. By such a structure, colored reflected light can be obtained on the front surface side.

By adjusting the main wavelength of reflected light on the front surface side, an obtained color can be adjusted. The main wavelength is a wavelength determined by tristimulus values defined by a CIE color system, and is defined by JIS Z-8701 and the international standard ISO7724. Incidentally, in the present invention, the "main wavelength" is assumed to be a value obtained by a measurement method of the main wavelength described in Examples.

The (Rₜ - R_{b}) value is more preferably 9% or more, and still more preferably 10% or more from a viewpoint of enhancing visibility of the color. The (Rₜ - R_{b}) value is preferably 90% or less, and more preferably 50% or less.

The above luminous reflectance is obtained by appropriately changing a film thickness while refractive indices of the low refractive index layer and the high refractive index layer of the functional film (C1) are considered. The main wavelength and the (Rₜ - R_{b}) value are measured by a measurement method described in Examples.

In the mirror-coated lens of the present invention, a maximum reflectance of reflected light on the back surface side at a wavelength of 380 nm to 780 nm is preferably 15% or less. That is, by the maximum reflectance of 15% or less in a visible light region at a wavelength of 380 nm to 780 nm, a noticeable wavelength peak in reflected light can be removed, and reflected light on the back surface side can be colorless. The maximum reflectance is more preferably 10% or less, still more preferably 8% or less, and usually 1% or more.

The above luminous reflectance is obtained by appropriately changing a film thickness while refractive indices of the low refractive index layer and the high refractive index layer of the functional film (C2) are considered. The maximum reflectance is measured by a measurement method described in Examples.

### [Functional film (C1)]

The functional film (C1) is disposed on the front surface, and includes a low refractive index layer (C1a), a high refractive index layer (C1b), and a metal layer (C1c).

In the functional film (C1), preferably, the low refractive index layer (C1a) and the high refractive index layer (C1b) are alternately disposed, and the one or more metal layers (C1c) are disposed therebetween. By disposing the metal layer (C1c), for example, a reflection amplifying effect is obtained, and a surface of an eyeglass lens can have a mirror gloss. Furthermore, by designing layer thicknesses of the low refractive index layer (C1a) and the high refractive index layer (C1b) and the lamination number, the surface can have a low reflecting property.

### [Low refractive index layer (C1a)]

For example, the refractive index of the low refractive index layer (C1a) at a wavelength of 500 nm to 550 nm is preferably from 1.35 to 1.80, and more preferably from 1.45 to 1.50.

For example, the low refractive index layer (C1a) is formed of an inorganic oxide, preferably of SiO₂.

### [High refractive index layer (C1b)]

For example, the refractive index of the high refractive index layer (C1b) at a wavelength of 500 nm to 550 nm is preferably from 1.90 to 2.60, and more preferably from 2.00 to 2.40.

For example, the high refractive index layer (C1b) is formed of an inorganic oxide.

The inorganic oxide used for the high refractive index layer (C1b) is preferably at least one inorganic oxide selected from ZrO₂, Ta₂O₅, Y₂O₃, TiO₂, Nb₂O₅, and Al₂O₃, more preferably ZrO₂ or Ta₂O₅, and still more preferably ZrO₂. By using ZrO₂, scratch resistance can be improved while heat resistance is maintained.

### [Metal layer (C1c)]

The metal layer means a layer having a metallic color.

Examples of a substance used for the metal layer include a substance which is at least one selected from a metal, a metal oxide, a metal nitride, a metal carbide, and a metal nitrogen oxide and has a metallic color. A metal is preferable from a viewpoint of easy availability.

For example, a metal species contained in the metal layer is at least one selected from Cr, Ta, Nb, Ti, and Zr. Cr is preferable in order to enhance an effect of cutting blue light. By disposing the metal layer, an antistatic effect is exhibited.

The functional film may include one or more metal layers.

The total luminous transmittance of the metal layers is preferably from 50 to 90%, more preferably from 50 to 85%, and still more preferably from 55 to 79% in order to obtain a mirror lens having a high transmittance.

A film thickness of one metal layer is preferably from 0.1 to 50 nm, more preferably from 0.5 to 20 nm, and still more preferably from 1 to 15 nm.

The total film thickness of the functional film (C1) is preferably from 200 to 800 nm, and more preferably from 300 to 600 nm.

The lamination number in the functional film (C1) is preferably from 6 to 12, more preferably from 7 to 10, and still more preferably 8 or 9.

As a preferable aspect of the present invention, a functional film having the lamination number of 8 or 9 will be described below.

### (The lamination number of 9)

The functional film (C1) preferably has a structure in which a first layer which is a low refractive index layer having a film thickness of 0.01 λ to 1.05 λ, a second layer which is a high refractive index layer having a film thickness of 0.01 λ to 0.25 λ, a third layer which is a low refractive index layer having a film thickness of 0.01 λ to 0.25 λ, a fourth layer which is a metal layer having a film thickness of 0.1 to 50 nm, a fifth layer which is a high refractive index layer having a film thickness of 0.10 λ to 0.40 λ, a sixth layer which is a metal layer having a film thickness of 0.1 to 50 nm, a seventh layer which is a low refractive index layer having a film thickness of 0.10 λ to 0.40 λ, an eighth layer which is a high refractive index layer having a film thickness of 0.01 λ to 0.25 λ, and a ninth layer which is a low refractive index layer having a film thickness of 0.10 λ to 0.90 λ are laminated in this order from the lens base material side. Incidentally, the above λ is from 450 to 550 nm.

As a preferable embodiment, the functional film (C1) has a structure in which a first layer which is a low refractive index layer having a film thickness of 0.20 λ to 0.27 λ, a second layer which is a high refractive index layer having a film thickness of 0.05 λ to 0.07 λ, a third layer which is a low refractive index layer having a film thickness of 0.11 λ to 0.15 λ, a fourth layer which is a metal layer having a film thickness of 3 to 8 nm, a fifth layer which is a high refractive index layer having a film thickness of 0.27 λ to 0.36 λ, a sixth layer which is a metal layer having a film thickness of 3 to 8 nm, a seventh layer which is a low refractive index layer having a film thickness of 0.21 λ to 0.28 λ, an eighth layer which is a high refractive index layer having a film thickness of 0.08 λ to 0.11 λ, and a ninth layer which is a low refractive index layer having a film thickness of 0.23 λ to 0.31 λ are laminated in this order from the lens base material side. Incidentally, the above λ is from 450 to 550 nm, and is more specifically 500 nm.

As a preferable embodiment, the functional film (C1) has a structure in which a first layer which is a low refractive index layer having a film thickness of 0.20 λ to 0.27 λ, a second layer which is a high refractive index layer having a film thickness of 0.05 λ to 0.07 λ, a third layer which is a low refractive index layer having a film thickness of 0.13 λ to 0.17 λ, a fourth layer which is a metal layer having a film thickness of 3 to 8 nm, a fifth layer which is a high refractive index layer having a film thickness of 0.24 λ to 0.32 λ, a sixth layer which is a metal layer having a film thickness of 3 to 8 nm, a seventh layer which is a low refractive index layer having a film thickness of 0.19 λ to 0.25 λ, an eighth layer which is a high refractive index layer having a film thickness of 0.09 λ to 0.12 λ, and a ninth layer which is a low refractive index layer having a film thickness of 0.58 λ to 0.78 λ are laminated in this order from the lens base material side. Incidentally, the above λ is from 450 to 550 nm, and is more specifically 500 nm.

### (The lamination number of 8)

The functional film (C1) preferably has a structure in which a first layer which is a low refractive index layer having a film thickness of 0.10 λ to 0.80 λ, a second layer which is a high refractive index layer having a film thickness of 0.10 λ to 0.40 λ, a third layer which is a low refractive index layer having a film thickness of 0. 01 λ to 0.25 λ, a fourth layer which is a metal layer having a film thickness of 0.1 to 50 nm, a fifth layer which is a high refractive index layer having a film thickness of 0.01 λ to 0.25 λ, a sixth layer which is a low refractive index layer having a film thickness of 0.01 λ to 0.25 λ, a seventh layer which is a high refractive index layer having a film thickness of 0.10 λ to 0.60 λ, and an eighth layer which is a low refractive index layer having a film thickness of 0.01 λ to 0.30 λ are laminated in this order from the lens base material side. Incidentally, the above λ is from 450 to 550 nm.

As a preferable embodiment, the functional film (C1) has a structure in which a first layer which is a low refractive index layer having a film thickness of 0.51 λ to 0.68 λ, a second layer which is a high refractive index layer having a film thickness of 0.25 λ to 0.33 λ, a third layer which is a low refractive index layer having a film thickness of 0.06 λ to 0.08 λ, a fourth layer which is a metal layer having a film thickness of 1 to 15 nm, a fifth layer which is a high refractive index layer having a film thickness of 0.12 λ to 0.16 λ, a sixth layer which is a low refractive index layer having a film thickness of 0.08 λ to 0.10 λ, a seventh layer which is a high refractive index layer having a film thickness of 0.34 λ to 0.45 λ, and an eighth layer which is a low refractive index layer having a film thickness of 0.19 λ to 0.25 λ are laminated in this order from the lens base material side. Incidentally, the above λ is from 450 to 550 nm, and is more specifically 500 nm.

### [Functional film (C2)]

The functional film (C2) is disposed on the back surface, and includes a low refractive index layer (C2a) and a high refractive index layer (C2b).

In the functional film (C2), the low refractive index layer (C2a) and the high refractive index layer (C2b) are disposed alternately. Furthermore, by designing layer thicknesses of the low refractive index layer (C2a) and the high refractive index layer (C2b) and the lamination number, the surface can have a low reflecting property.

As materials used for the low refractive index layer (C2a) and the high refractive index layer (C2b), materials exemplified for the low refractive index layer (C1a) and the high refractive index layer (C1b) are preferably used.

The total thickness of the functional film (C2) is preferably from 100 to 800 nm, and more preferably from 250 to 400 nm.

The lamination number of the functional film (C2) is preferably from 4 to 10, more preferably from 5 to 8, and still more preferably 7.

As a preferable aspect of the present invention, a functional film having the lamination number of 7 will be described below.

The functional film (C2) preferably has a structure in which a first layer which is a low refractive index layer having a film thickness of 0.01 λ to 0.25 λ, a second layer which is a high refractive index layer having a film thickness of 0.01 λ to 0.25 λ, a third layer which is a low refractive index layer having a film thickness of 0.10 λ to 0.80 λ, a fourth layer which is a high refractive index layer having a film thickness of 0.01 λ to 0.25 λ, a fifth layer which is a low refractive index layer having a film thickness of 0.01 λ to 0.25 λ, a sixth layer which is a high refractive index layer having a film thickness of 0.01 λ to 0.30 λ, and a seventh layer which is a low refractive index layer having a film thickness of 0.10 λ to 0.50 λ, disposed on the lens base material side, are laminated in this order. Incidentally, the above λ is from 450 to 550 nm.

As a preferable embodiment, the functional film (C2) has a structure in which a first layer which is a low refractive index layer having a film thickness of 0.07 λ to 0.10 λ, a second layer which is a high refractive index layer having a film thickness of 0.04 λ to 0.06 λ, a third layer which is a low refractive index layer having a film thickness of 0.48 λ to 0.64 λ, a fourth layer which is a high refractive index layer having a film thickness of 0.12 λ to 0.15 λ, a fifth layer which is a low refractive index layer having a film thickness of 0.06 λ to 0.08 λ, a sixth layer which is a high refractive index layer having a film thickness of 0.20 λ to 0.27 λ, and a seventh layer which is a low refractive index layer having a film thickness of 0.24 λ to 0.32 λ, disposed on the lens base material side, are laminated in this order. Incidentally, the above λ is from 450 to 550 nm, and is more specifically 500 nm.

As a preferable embodiment, the functional film (C2) has a structure in which a first layer which is a low refractive index layer having a film thickness of 0.05 λ to 0.07 λ, a second layer which is a high refractive index layer having a film thickness of 0.02 λ to 0.03 λ, a third layer which is a low refractive index layer having a film thickness of 0.53 λ to 0.71 λ, a fourth layer which is a high refractive index layer having a film thickness of 0.09 λ to 0.12 λ, a fifth layer which is a low refractive index layer having a film thickness of 0.10 λ to 0.14 λ, a sixth layer which is a high refractive index layer having a film thickness of 0.14 λ to 0.18 λ, and a seventh layer which is a low refractive index layer having a film thickness of 0.29 λ to 0.39 λ, disposed on the lens base material side, are laminated in this order. Incidentally, the above λ is from 450 to 550 nm, and is more specifically 500 nm.

### [Lens base material]

As the lens base material, a plastic lens base material is preferable. Examples of the plastic lens base material include a methyl methacrylate homopolymer, a copolymer of methyl methacrylate and one or more other monomers, a diethylene glycol bis(allyl carbonate) homopolymer, a copolymer of diethylene glycol bis(allyl carbonate) and one or more other monomers, a sulfur-containing copolymer, a halogen copolymer, polycarbonate, polystyrene, polyvinyl chloride, unsaturated polyester, polyethylene terephthalate, polyurethane, and polythiourethane. The refractive index of the plastic base material is preferably from 1.5 to 1.8.

### [Hard coat layer]

In the present invention, a hard coat layer to improve scratch resistance of the lens may be disposed between the lens base material and the functional film. Examples of a material of the hard coat layer include an organosilicon compound, an acrylic compound, and an epoxy compound which may contain a particulate inorganic oxide suchas silicon oxide, titanium oxide, or tin oxide. A thermosetting compound, a UV curable compound, or the like is used, but the material is not limited thereto. In order to further improve physical properties such as adhesion between the functional film and the hard coat layer, the hard coat layer may be subjected to a known plasma treatment, an ion gun treatment, or an electronic treatment. In a case of the ion gun treatment, oxygen gas or argon is used, and an ion acceleration voltage is preferably from 200 to 500 V.

In the present invention, a primer layer to improve impact resistance and adhesion may be disposed between the lens base material and the hard coat layer. Examples of a material of the primer layer include a composition formed of a specific sulfur compound having a dithiane ring skeleton and/or a specific sulfur compound having a benzene ring and a polyfunctional thiol described in JP 2000-2801 A, (A) polycarbonate represented by general formula (I) R-O-CO-[-O-R¹-O-CO-]ₙ-O-R ··· (I) [in the formula, R represents an unsaturated group, R¹ represents a divalent aliphatic or aromatic group, and n represents the number of 1 to 9], (B) polythiol represented by general formula (II) R²-(-SH)ₘ ··· (II) [in the formula, R² represents a polyvalent organic group, and m represents an integer of 2 or more], and (C) a composition formed of 60 to 95% by mass of a polymerizable composition containing a photopolymerization initiator and 5 to 40% by mass of a high refractive index metal compound sol, described in JP 11-228802 A, and a polyurethane resin obtained from an active hydrogen-containing compound selected from an alkyleneglycol, a polyalkylene glycol, a poly (alkyleneadipate), poly-s-polycaprolactone, a polybutadiene glycol, a poly (alkylene carbonate), and silicone polyol and polyisocyanate, described in JP 6-79084 A.

As described above, the mirror-coated lens of the present invention is used as a lens for eyeglasses such as sunglasses. The lens in the present invention includes a so-called lens of plain glass.

### Examples

Hereinafter, the present invention will be described in more detail using Examples, but the present invention is not limited to these Examples. Physical properties of plastic lenses obtained in Examples and Comparative Examples were evaluated as follows.

### [Luminous reflectance]

As for a front surface side luminous reflectance and a back surface side luminous reflectance of a lens, a luminous reflectance of a lens having a film described in Table disposed on a surface thereof was measured form the front surface side and the back surface side using a spectrophotometer U-4100 (manufactured by Hitachi High-Technologies Corporation).

A wavelength of 380 to 780 nm was measured. A value calculated in consideration of a weight of a relative luminous sensitivity in accordance with International Standard ISO 8980-4 in the wavelength region was used as the luminous reflectance.

### [Luminous transmittance]

The luminous transmittance of a lens was measured using a spectrophotometer U-4100 (manufactured by Hitachi High-Technologies Corporation).

A wavelength of 380 to 780 nm was measured. A value calculated in consideration of a weight of a relative luminous sensitivity in accordance with International Standard ISO 8980-4 in the wavelength region was used as the luminous transmittance.

### [Main wavelength of reflected light, maximum reflectance, (Rₜ - R_{b}) value]

A main wavelength of reflected light of a lens was measured using a spectrophotometer U-4100 (manufactured by Hitachi High-Technologies Corporation) . A wavelength of 380 to 780 nm was measured.

A wavelength at a maximum peak in the above wavelength region was used as a main wavelength of reflected light.

A maximum value of reflectance in the above wavelength region was used as a maximum reflectance (when no peak existed, a maximum value at a base line was used as the maximum reflectance).

A peak value at the main wavelength in the above wavelength region was used as a maximum reflectance Rₜ. A minimum value of reflectance in the above wavelength region was used as a minimum reflectance R_{b}. A (Rₜ-R_{b}) value was calculated from these values.

### [Mirror effect]

The obtained mirror-coated lens was observed with naked eyes to examine whether the mirror-coated lens had a mirror effect as mirror coating. A mirror-coated lens having a mirror effect as mirror coating was evaluated as "○", and a mirror-coated lens having no mirror effect was evaluated as "×".

### [Heat resistance]

A plastic lens was heated in a dry oven at 50°C for one hour. When a crack was not generated, the temperature was raised by 5°C, and the plastic lens was heated in a similar manner. The temperature was raised at a pitch of 5°C to measure a generation temperature of cracks.

### [Blue light cutting ratio]

In the measurement of the luminous reflectance, a value obtained by subtracting an average reflectance at a wavelength of 380 nm to 500 nm on the front surface side from 100 was used as a blue light cutting ratio.

### [Flare phenomenon suppression evaluation]

While sunglasses equipped with a mirror lens were worn, it was observed whether a flare phenomenon was identified.
A: A flare phenomenon cannot be identified.
B: A flare phenomenon is identified slightly.
C: A flare phenomenon is identified clearly.

### [Ghost phenomenon suppression evaluation]

While sunglasses equipped with a mirror lens were worn, it was observed whether a ghost phenomenon was identified.
A: A ghost phenomenon cannot be identified.
B: A ghost phenomenon is identified slightly.
C: A ghost phenomenon is identified clearly.

### Examples 1 to 3

A solution obtained by putting 90 parts by mass of colloidal silica (Snowtex-40, manufactured by Nissan Chemical Industries, Ltd.), 81.6 parts by mass of an organosilicon compound methyl trimethoxysilane, 176 parts by mass of γ-glycidoxypropyltrimethoxysilane, 2.0 parts by mass of 0.5 N hydrochloric acid, 20 parts by mass of acetic acid, and 90 parts by mass of water into a glass container was stirred at room temperature for eight hours, and then was allowed to stand at room temperature for 16 hours to obtain a hydrolyzed solution. To this solution, 120 parts by mass of isopropyl alcohol, 120 parts by mass of n- butyl alcohol, 16 parts by mass of aluminum acetylacetone, 0.2 parts by mass a silicone surfactant, and 0.1 parts by mass of an ultraviolet absorber were added. The resulting mixture was stirred at room temperature for eight hours, and then was aged at room temperature for 24 hours to obtain a coating solution. A plastic lens base material which had been pretreated with an alkali aqueous solution (HILUX (trade name) manufactured by HOYA Corporation, plastic lens for eyeglasses, refractive index 1.50) was immersed in the coating solution. After immersion was completed, the plastic lens which had been pulled up at a pulling rate of 20 cm/ minute was heated at 120°C for two hours to form a cured film and form a hard coat layer (referred to as layer A). Subsequently, a functional layer formed of layers described in Table was formed on the hard coat layer by a vacuum vapor deposition method to obtain a plastic lens. In Table, the refractive index of SiO₂ is 1.45, and the refractive index of ZrO₂ is 2.10. The resulting plastic lenses were evaluated, and results thereof are indicated in the following Table.

### Examples 4 to 7

142 parts by mass of an organosilicon compound γ-glycidoxypropyltrimethoxysilane was added, and 1.4 parts by mass of 0.01 N hydrochloric acid and 32 parts by mass of water were dropwise added thereto while being stirred. After dropwise addition was completed, the resulting mixture was stirred for 24 hours to obtain a γ-glycidoxypropyltrimethoxysilane hydrolyzed solution. To this solution, 460 parts by mass of a stannic oxide-zirconium oxide composite sol (dispersed in methanol, total metal oxide 31.5% by mass, average particle diameter 10 to 15 millimicron), 300 parts by mass of ethyl cellosolve, 0.7 parts by mass of a silicone surfactant as a lubricant, and 8 parts by mass of aluminum acetylacetonate as a curing agent were added, and were sufficiently stirred. Thereafter, the resulting mixture was filtered to obtain a coating solution. A plastic lens base material which had been pretreated with an alkali aqueous solution (manufactured by HOYA Corporation, plastic lens for eyeglasses (trade name: EYAS), refractive index 1.60) was immersed in the coating solution. After immersion was completed, the plastic lens which had been
pulled up at a pulling rate of 20 cm/ minute was heated at 120°C for two hours to form a cured film.

A hard coat layer (referred to as B layer) was formed. Subsequently, a functional layer formed of layers described in Table was formed on the hard coat layer by a vacuum vapor deposition method to obtain a plastic lens. In Table, the refractive index of SiO₂ is 1.45, and the refractive index of ZrO₂ is 2.10. The resulting plastic lenses were evaluated, and results thereof are indicated in the following Table.

### Examples 8 to 10

Into a glass container, 1045 parts by mass of γ-glycidoxypropyl (trimethoxy) silane and 200 parts by mass of γ-glycidoxypropylmethyl (diethoxy) silane were put. While the resulting mixture was stirred, 299 parts by mass of 0.01 mol/l hydrochloric acid was added thereto. Stirring was continued in a clean room at 10°C during an entire day and night to obtain a silane hydrolyzate.

In another container, to 3998 parts by mass of a composite fine particle sol mainly containing titanium oxide, zirconium oxide, and silicon oxide (dispersed in methanol, total solid content 30% by mass, average particle diameter 5 to 8 millimicron), 4018 parts by mass of methyl cellosolve and 830 parts by mass of isopropanol were added. The resulting mixture was stirred and mixed. 4 parts by mass of a silicone surfactant ("L-7001" manufactured by Nippon Unicar Co., Ltd.) and 100 parts by mass of aluminum acetylacetonate were further added thereto, and stirring was continued in a clean room at 10°C during an entire day and night in a similar manner to the above. Thereafter, the resulting solution was mixed with the above hydrolyzate, and the resulting mixture was further stirred during an entire day and night. Thereafter, the resulting solution was filtered through a 3 µm filter to obtain a hard coat solution.

A plastic lens base material which had been pretreated with an alkali aqueous solution (trade name: EYNOA manufactured by HOYA Corporation, plastic lens for eyeglasses, refractive index 1.67) was immersed in the coating solution. After immersion was completed, the plastic lens which had been pulled up at a pulling rate of 20 cm/ minute was heated at 120°C for two hours to form a cured film and form a hard coat layer (referred to as C layer) . Subsequently, a functional layer formed of layers described in Table was formed on the hard coat layer by a vacuum vapor deposition method to obtain a plastic lens. In Table, the refractive index of SiO₂ is 1.45, and the refractive index of ZrO₂ is 2.10. The resulting plastic lenses were evaluated, and results thereof are indicated in the following Table.

### [Table 1]

**Table 1**

| | | Example 1 | | Example 2 | | Example 3 | |
|---|---|---|---|---|---|---|---|
| Base material | | HL15 | | HL15 | | HL15 | |
| Convex surface hard coat layer | | A layer | | A layer | | A layer | |
| Convex surface functional layer | Layer structure (from base material side) | Component | Film thickness | Component | Film thickness | Component | Film thickness |
| | First layer | SiO₂ | 0.22 λ | SiO₂ | 0.22 λ | SiO₂ | 0.56 λ |
| | Second layer | ZrO₂ | 0.06 λ | ZrO₂ | 0.06 A | ZrO₂ | 0.27 λ |
| | Third layer | SiO₂ | 0.12 λ | SiO₂ | 0.14 λ | SiO₂ | 0.06 λ |
| | Fourth layer *1 | Cr | Transmittance 80% (5.0 nm) | Cr | Transmittance 80% (5.0 nm) | Cr | Transmittance 58% (8.0 nm) |
| | Fifth layer | ZrO₂ | 0.30 λ | ZrO₂ | 0.27 λ | ZrO₂ | 0.13 λ |
| | Sixth layer *2 | Cr | Transmittance 65% (5.0 nm) | Cr | Transmittance 65% (5.0 nm) | SiO₂ | 0.08 λ |
| | Seventh layer | SiO₂ | 0.23 λ | SiO₂ | 0.21 λ | ZrO₂ | 0.37 λ |
| | Eight layer | ZrO₂ | 0.09 λ | ZrO₂ | 0.10 λ | SiO₂ | 0.21 λ |
| | Ninth layer | SiO₂ | 0.26 A | SiO₂ | 0.65 λ | - | - |
| | Tenth layer | - | - | - | - | - | - |
| Concave surface hard coat layer | | A layer | | A layer | | A layer | |
| Concave surface functional layer | Layer structure (from base material side) | Component | Film thickness | Component | Film thickness | Component | Film thickness |
| | First layer | SiO₂ | 0.06 λ | SiO₂ | 0.06 λ | SiO₂ | 0.06 λ |
| | Second layer | ZrO₂ | 0.02 λ | ZrO₂ | 0.02 λ | ZrO₂ | 0.02 λ |
| | Third layer | SiO₂ | 0.67 λ | SiO₂ | 0.67 λ | SiO₂ | 0.67 λ |
| | Fourth layer | ZrO₂ | 0.10 λ | ZrO₂ | 0.10 λ | ZrO₂ | 0.10 λ |
| | Fifth layer | SiO₂ | 0.12 λ | SiO₂ | 0.12 λ | SiO₂ | 0.12 λ |
| | Sixth laver | ZrO₂ | 0.15 λ | ZrO₂ | 0.15 λ | ZrO₂ | 0.15 λ |
| | Seventh layer | SiO₂ | 0.33 λ | SiO₂ | 0.33 λ | SiO₂ | 0.33 λ |
| Convex surface luminous reflectance (%) | | 21.9 | | 9.2 | | 8.06 | |
| Concave surface luminous reflectance (%) | | 2.3 | | 2.8 | | 2.07 | |
| Luminous transmittance | | 65.5 | | 68.8 | | 78.4 | |
| Mirror effect | | ○ | | ○ | | ○ | |
| Heat resistance | | 95°C | | 90°C | | 80°C | |
| Blue light cutting ratio (%) | | 36.13 | | 38.03 | | 30.49 | |
| Main wavelength in convex surface reflection [nm] | | 604 | | 479 | | 593 | |
| Color of reflected light on convex surface | | Silver | | Blue | | Orange | |
| Rt-Rb value on convex surface (%) | | 12 | | 12 | | 12 | |
| Maximum reflectance on concave surface (%) | | 6 | | 6 | | 6 | |
| Suppression of ghost phenomenon | | A | | A | | A | |
| Suppression of flare phenomenon | | A | | A | | A | |

| | | | | | | | |
|---|---|---|---|---|---|---|---|
| λ = 500 nm *1 : Transmittance of the fourth layer is a luminous transmittance (%) when monitor glass is subjected to vapor deposition. A Numerical value in parentheses is a physical film thickness. *2 : Transmittance of the sixth layer is a total luminous transmittance (%) when monitor glass of *1 is further subjected to vapor deposition. A numerical value in parentheses is a physical film thickness. | | | | | | | |

### [Table 2]

**Table 2**

| | | Example 4 | | Example 5 | | Example 6 | |
|---|---|---|---|---|---|---|---|
| Base material | | EYAS16 | | EYAS16 | | EYAS16 | |
| Convex surface hard coat layer | | B layer | | B layer | | B layer | |
| Convex surface functional layer | Layer structure (from base material side) | Component | Film thickness | Component | Film thickness | Component | Film thickness |
| | First layer | SiO₂ | 0.22 λ | SiO₂ | 0.22 λ | SiO₂ | 0.56 λ |
| | Second layer | ZrO₂ | 0.06 λ | ZrO₂ | 0.06 A | ZrO₂ | 0.27 λ |
| | Third layer | SiO₂ | 0.12 λ | SiO₂ | 0.14 λ | SiO₂ | 0.06 λ |
| | Fourth layer *1 | Cr | Transmittance 80% (5.0 nm) | Cr | Transmittance 80% (5.0 nm) | Cr | Transmittance 58% (8.0 nm) |
| | Fifth layer | ZrO₂ | 0.30 λ | ZrO₂ | 0.27 λ | ZrO₂ | 0.13 λ |
| | Sixth layer *2 | Cr | Transmittance 65% (5.0 nm) | Cr | Transmittance 65% (5.0 nm) | SiO₂ | 0.08 λ |
| | Seventh layer | SiO₂ | 0.23 λ | SiO₂ | 0.21 A | ZrO₂ | 0.37 λ |
| | Eighth layer | ZrO₂ | 0.09 λ | ZrO₂ | 0.10 λ | SiO₂ | 0.21 λ |
| | Ninth layer | SiO₂ | 0.26 λ | SiO₂ | 0.65 λ | - | - |
| | Tenth layer | - | - | - | - | - | - |
| Concave surface hard coat layer | | B layer | | B layer | | B layer | |
| Concave surface functional layer | Layer structure (from base material side) | Component | Film thickness | Component | Film thickness | Component | Film thickness |
| | First layer | SiO₂ | 0.06 λ | SiO₂ | 0.06 λ | SiO₂ | 0.06 λ |
| | Second layer | ZrO₂ | 0.03 λ | ZrO₂ | 0.03 A | ZrO₂ | 0.03 λ |
| | Third layer | SiO₂ | 0.59 λ | SiO₂ | 0.59 λ | SiO₂ | 0.59 λ |
| | Fourth laver | ZrO₂ | 0.10 λ | ZrO₂ | 0.10 λ | ZrO₂ | 0.10 λ |
| | Fifth laver | SiO₂ | 0.11 λ | SiO₂ | 0.11 λ | SiO₂ | 0.11 λ |
| | Sixth layer | ZrO₂ | 0.15 λ | ZrO₂ | 0.15 λ | ZrO₂ | 0.15 λ |
| | Seventh layer | SiO₂ | 0.32 λ | SiO₂ | 0.32 λ | SiO₂ | 0.32 λ |
| Convex surface luminous reflectance % | | 21.83 | | 14.73 | | 6.98 | |
| Concave surface luminous reflectance (%) | | 4.91 | | 4.3 | | 1.66 | |
| Luminous transmittance | | 60.8 | | 70.5 | | 77.0 | |
| Mirror effect | | ○ | | ○ | | ○ | |
| Heat resistance | | 130°C | | 125°C | | 115°C | |
| Blue light cutting ratio (%) | | 41.74 | | 44.38 | | 46.31 | |
| Main wavelength in convex surface reflection [nm] | | 572 | | 479 | | 589 | |
| Color of reflected light on convex surface | | Silver | | Blue | | Orange | |
| Rt-Rb value of convex surface (%) | | 12 | | 12 | | 12 | |
| Maximum reflectance on concave surface(%) | | 6 | | 6 | | 6 | |
| Suppression of ghost phenomenon | | A | | A | | A | |
| Suppression of flare phenomenon | | A | | A | | A | |

| | | | | | | | |
|---|---|---|---|---|---|---|---|
| λ = 500 nm *1 : Transmittance of the fourth layer is a luminous transmittance (%) when monitor glass is subjected to vapor deposition. A numerical value in parentheses is a physical film thickness. *2 : Transmittance of the sixth layer is a total luminous transmittance (%) when monitor glass of *1 is further subjected to vapor deposition. A numerical value in parentheses is a physical film thickness. | | | | | | | |

[Table 3]

**Table 3**

| | | Example 7 | |
|---|---|---|---|
| Base material | | EYAS16 | |
| Convex surface hard coat layer | | B layer | |
| Convex surface functional layer | Layer structure (from base material side) | Component | Film thickness |
| | First layer | SiO₂ | 0.22 λ |
| | Second layer | ZrO₂ | 0.06 λ |
| | Third layer | SiO₂ | 0.12 λ |
| | Fourth layer *1 | Cr | Transmittance 80% (5.0 nm) |
| | Fifth layer | ZrO₂ | 0.30 λ |
| | Sixth layer *2 | Cr | Transmittance 65% (5.0 nm) |
| | Seventh layer | SiO₂ | 0.23 λ |
| | Eighth layer | ZrO₂ | 0.09 λ |
| | Ninth layer | SiO₂ | 0.26 λ |
| | Tenth layer | - | - |
| Concave surface hard coat layer | | B layer | |
| Concave surface functional layer | Layer structure (from base material side) | Component | Film thickness |
| | First layer | SiO₂ | 0.05 λ |
| | Second layer | ZrO₂ | 0.02 λ |
| | Third layer | SiO₂ | 0.52 λ |
| | Fourth layer | ZrO₂ | 0.12 λ |
| | Fifth layer | SiO₂ | 0.08 λ |
| | Sixth layer | ZrO₂ | 0.20 λ |
| | Seventh layer | SiO₂ | 0.28 A |
| Convex surface luminous reflectance (%) | | 21.82 | |
| Concave surface luminous reflectance (%) | | 4.9 | |
| Luminous transmittance | | 69.1 | |
| Mirror effect | | ○ | |
| Heat resistance | | 120°C | |
| Blue light cutting ratio (%) | | 45.49 | |
| Main wavelength in convex surface reflection [nm] | | 571 | |
| Color of reflected light on convex surface | | Silver | |
| Rt-Rb value of convex surface (%) | | 12 | |
| Maximum reflectance on concave surface (%) | | 8 | |
| Suppression of ghost phenomenon | | A | |
| Suppression of flare phenomenon | | A | |

| | | | |
|---|---|---|---|
| A = 500 nm *1 : Transmittance of the fourth layer is a luminous transmittance (%) when monitor glass is subjected to vapor deposition. A numerical value in parentheses is a physical film thickness. *2 : Transmittance of the sixth layer is a total luminous transmittance (%) when monitor glass of *1 is further subjected to vapor deposition. A numerical value in parentheses is a physical film thickness. | | | |

### [Table 4]

**Table 4**

| | | Example 8 | | Example 9 | | Example 10 | |
|---|---|---|---|---|---|---|---|
| Base material | | EYNOA167 | | EYNOA167 | | EYNOA167 | |
| Convex surface hard coat layer | | C layer | | C layer | | C layer | |
| Convex surface functional layer | Layer structure (from base material side) | Component | Film thickness | Component | Film thickness | Component | Film thickness |
| | First layer | SiO₂ | 0.22 λ | SiO₂ | 0.22 λ | SiO₂ | 0.56 λ |
| | Second layer | ZrO₂ | 0.06 λ | ZrO₂ | 0.06 A | ZrO₂ | 0.27 λ |
| | Third layer | SiO₂ | 0.12 λ | SiO₂ | 0.14 λ | SiO₂ | 0.06 λ |
| | Fourth layer *1 | Cr | Transmittance 80% (5.0 nm) | Cr | Transmittance 80% (5.0 nm) | Cr | Transmittance 58% (8.0 nm) |
| | Fifth layer | ZrO₂ | 0.30 λ | ZrO₂ | 0.26 λ | ZrO₂ | 0.13 λ |
| | Sixth layer *2 | Cr | Transmittance 65% (5.0 nm) | Cr | Transmittance 65% (5.0 nm) | SiO₂ | 0.08 λ |
| | Seventh layer | SiO₂ | 0.23 A | SiO₂ | 0.21 λ | ZrO₂ | 0.37 λ |
| | Eighth layer | ZrO₂ | 0.09 λ | ZrO₂ | 0.10 λ | SiO₂ | 0.21 λ |
| | Ninth layer | SiO₂ | 0.26 λ | SiO₂ | 0.65 λ | - | - |
| | Tenth layer | - | - | - | - | - | - |
| Concave surface hard coat layer | | C layer | | C layer | | C layer | |
| Concave surface functional layer | Layer structure (from base material side) | Component | Film thickness | Component | Film thickness | Component | Film thickness |
| | First layer | SiO₂ | 0.08 λ | SiO₂ | 0.08 λ | SiO₂ | 0.08 λ |
| | Second layer | ZrO₂ | 0.04 λ | ZrO₂ | 0.04 λ | ZrO₂ | 0.04 λ |
| | Third layer | SiO₂ | 0.61 λ | SiO₂ | 0.61 λ | SiO₂ | 0.61 λ |
| | Fourth layer | ZrO₂ | 0.11 λ | ZrO₂ | 0.11 λ | ZrO₂ | 0.11 λ |
| | Fifth layer | SiO₂ | 0.11 λ | SiO₂ | 0.11 λ | SiO₂ | 0.11 λ |
| | Sixth layer | ZrO₂ | 0.17 λ | ZrO₂ | 0.17 λ | ZrO₂ | 0.17 λ |
| | Seventh layer | SiO₂ | 0.32 λ | SiO₂ | 0.32 λ | SiO₂ | 0.32 λ |
| Convex surface luminous reflectance (%) | | 22.12 | | 11.32 | | 8.52 | |
| Concave surface luminous reflectance (%) | | 3.06 | | 3.32 | | 2.99 | |
| Luminous transmittance | | 59.2 | | 69.5 | | 74.8 | |
| Mirror effect | | ○ | | ○ | | ○ | |
| Heat resistance | | 120°C | | 120°C | | 105°C | |
| Blue light cutting ratio(%) | | 52.47 | | 54.94 | | 44.41 | |
| Main wavelength in convex surface reflection [nm] | | 575 | | 478 | | 589 | |
| Color of reflected light on convex surface | | Silver | | Blue | | Orange | |
| Rt-Rb value of convex surface (%) | | 12 | | 12 | | 12 | |
| Maximum reflectance on concave surface (%) | | 6 | | 6 | | 6 | |
| Suppression of ghost phenomenon | | A | | A | | A | |
| Suppression of flare phenomenon | | A | | A | | A | |

| | | | | | | | |
|---|---|---|---|---|---|---|---|
| λ = 500 nm *1 : Transmittance of the fourth layer is a luminous transmittance (%) when monitor glass is subjected to vapor deposition. A numerical value in parentheses is a physical film thickness. *2 : Transmittance of the sixth layer is a total luminous transmittance (%) when monitor glass of *1 is further subjected to vapor deposition. A numerical value in parentheses is a physical film thickness. | | | | | | | |

Examples of the present invention indicate that even a mirror lens having an enhanced luminous transmittance can suppress a ghost phenomenon and a flare phenomenon by keeping a luminous reflectance on the back surface low.

### Industrial Applicability

The mirror-coated lens of the present invention has a high transmittance and can suppress a flare phenomenon and a ghost phenomenon, and therefore can be used as a lens for eyeglasses in sports glasses and fashion applications.

## Claims

1. A lens, which is a mirror-coated lens comprising:
(i) a lens base material;
(ii) on the front surface of the lens base material, a functional film (C1) containing a low refractive index layer, a high refractive index layer, and a metal layer; and
(iii) on the back surface of the lens base material, a functional film (C2) containing a low refractive index layer and a high refractive index layer,
and having
- a luminous reflectance on the front surface side of 3-30%,
- a luminous reflectance on the back surface side of 0.1-5.0%
- a luminous transmittance of 55-80%.

2. The lens of claim 1, wherein a metal species contained in the metal layer is at least one of Cr, Ta, Nb, Ti, and Zr.

3. The lens of claim 1 or 2, wherein the total luminous transmittance of the metal layers of the functional film (C1) is 50-90%.

4. The lens of any of claims 1-3, wherein a maximum reflectance of reflected light on the back surface side at a wavelength of 380-780 nm is ≤ 15%.

5. The lens of any of claims 1-4, wherein the main wavelength of reflected light on the front surface side is 380-600 nm, and the difference (Rₜ-R_{b}) between the maximum reflectance Rₜ at the main wavelength and the minimum reflectance R_{b} of reflected light on the front surface at a wavelength of 380-780 nm is ≥ 8%.

6. The lens of any of claims 1-5, wherein the blue light cutting ratio is 10-60%, determined as 100-X, with X being the average luminous reflectance at a wavelength of 380-500 nm on the front surface side of the lens.

## Patentansprüche

1. Verspiegelte Linse, die:
(i) ein Linsenbasismaterial;
(ii) auf der Vorderseite des Linsenbasismaterials, einen funktionellen Film (C1), der eine Schicht mit niedrigem Brechungsindex, eine Schicht mit hohem Brechungsindex und eine Metallschicht enthält; und
(iii) auf der Rückseite des Linsenbasismaterials, einen funktionellen Film (C2), der eine Schicht mit niedrigem Brechungsindex und eine Schicht mit hohem Brechungsindex enthält, umfasst und
- einen Lichtreflexionsgrad auf der Vorderseite von 3-30%,
- einen Lichtreflexionsgrad auf der Rückseite von 0,1-5,0%,
- eine Lichtdurchlässigkeit von 55-80% aufweist.

2. Verspiegelte Linse gemäß Anspruch 1, wobei die Metallspezies, die in der Metallschicht enthalten ist, mindestens eine von Cr, Ta, Nb, Ti und Zr ist.

3. Verspiegelte Linse gemäß Anspruch 1 oder 2, wobei die Gesamtlichtdurchlässigkeit der Metallschichten des funktionellen Films (C1) 50-90% beträgt.

4. Verspiegelte Linse gemäß einem der Ansprüche 1-3, wobei ein maximaler Reflexionsgrad des reflektierten Lichts auf der Rückseite bei einer Wellenlänge von 380-780 nm ≤ 15% ist.

5. Verspiegelte Linse gemäß einem der Ansprüche 1-4, wobei die Hauptwellenlänge des reflektierten Lichts auf der Vorderseite 380-600 nm beträgt und die Differenz (Rₜ-R_{b}) zwischen dem maximalen Reflexionsgrad Rₜ bei der Hauptwellenlänge und dem minimalen Reflexionsgrad R_{b} des reflektierten Lichts auf der Vorderseite bei einer Wellenlänge von 380-780 nm ≥ 8% ist.

6. Verspiegelte Linse gemäß einem der Ansprüche 1-5, wobei der Anteil an abgetrenntem blauem Licht auf der Vorderseite 10-60% beträgt, bestimmt als 100-X, wobei X für den mittleren Lichtreflexionsgrad bei einer Wellenlänge von 380-500 nm auf der Vorderseite der Linse steht.

## Revendications

1. Lentille, qui est une lentille revêtue d'un miroir comprenant :
(i) une matière de base de lentille ;
(ii) sur la surface avant de la matière de base de lentille, un film fonctionnel (C1) contenant une couche à faible indice de réfraction, une couche à haut indice de réfraction et une couche de métal ; et
(iii) sur la surface arrière de la matière de base de lentille, un film fonctionnel (C2) contenant une couche à faible indice de réfraction et une couche à haut indice de réfraction,
et ayant
- une réflectance lumineuse sur le côté surface avant de 3-30 %,
- une réflectance lumineuse sur le côté surface arrière de 0,1-5,0 %
- une transmittance lumineuse de 55-80 %.

2. Lentille selon la revendication 1, dans laquelle une espèce métallique contenue dans la couche de métal est au moins l'une de Cr, Ta, Nb, Ti et Zr.

3. Lentille selon la revendication 1 ou 2, dans laquelle la transmittance lumineuse totale des couches de métal du film fonctionnel (C1) est de 50-90 %.

4. Lentille selon l'une quelconque des revendications 1-3, dans laquelle une réflectance maximale de lumière réfléchie sur le côté surface arrière à une longueur d'onde de 380-780 nm est ≤ 15 %.

5. Lentille selon l'une quelconque des revendications 1-4, dans laquelle la longueur d'onde principale de lumière réfléchie sur le côté surface avant est de 380-600 nm et la différence (Rₜ-R_{b}) entre la réflectance maximale Rₜ à la longueur d'onde principale et la réflectance minimale R_{b} de lumière réfléchie sur la surface avant à une longueur d'onde de 380-780 nm est ≥ 8%.

6. Lentille selon l'une quelconque des revendications 1-5, dans laquelle le rapport de coupure de lumière bleue est de 10-60 %, déterminé par 100-X, X étant la réflectance lumineuse moyenne à une longueur d'onde de 380-500 nm sur le côté surface avant de la lentille.
